(19) Europäisches Patentamt
European Patent Office
Office européen des brevets

(11) **EP 1 259 833 B1**

(12) **FASCICULE DE BREVET EUROPEEN**

(45) Date de publication et mention
de la délivrance du brevet:
**14.05.2008 Bulletin 2008/20**

(21) Numéro de dépôt: **01909890.4**

(22) Date de dépôt: **23.02.2001**

(51) Int Cl.:
*G01S 3/74* (2006.01)     *G01S 3/04* (2006.01)
*G01S 3/48* (2006.01)

(86) Numéro de dépôt international:
**PCT/FR2001/000540**

(87) Numéro de publication internationale:
**WO 2001/065272 (07.09.2001 Gazette 2001/36)**

(54) **PROCEDE DE LOCALISATION DE SOURCES RADIOELECTRIQUES AU MOYEN D'UN RADIOGONIOMETRE HAUTE RESOLUTION DEUX VOIES**

VERFAHREN ZUM ORTEN VON FUNKQUELLEN MITTELS EINES HOCHAUFLÖSENDEN ZWEIKANALIGEN FUNKPEILERS

METHOD FOR LOCATING RADIOELECTRIC SOURCES USING TWO-CHANNEL HIGH RESOLUTION RADIOGONIOMETER

(84) Etats contractants désignés:
**AT BE CH CY DE DK ES FI FR GB GR IE IT LI LU MC NL PT SE TR**

(30) Priorité: **25.02.2000 FR 0002399**

(43) Date de publication de la demande:
**27.11.2002 Bulletin 2002/48**

(73) Titulaire: **Thales**
**92200 Neuilly Sur Seine (FR)**

(72) Inventeurs:
• **FERREOL, Anne,**
**Thomson-CSF Prop. Intell.**
**94117 Arcueil Cedex (FR)**
• **MONOT, Jean-Jacques,**
**Thomson-CSF Propriété Intell.**
**94117 Arcueil Cedex (FR)**

(74) Mandataire: **Dudouit, Isabelle**
**Marks & Clerk France**
**31-33 Avenue Aristide Briand**
**94117 Arcueil Cedex (FR)**

(56) Documents cités:
**EP-A- 0 847 161          EP-A- 0 926 510**
**DE-A- 4 407 716          DE-C- 3 639 057**

• **VIBERG M ET AL: "Detection and estimation in sensor arrays using weighted subspace fitting" IEEE TRANSACTIONS ON SIGNAL PROCESSING, NOV. 1991, USA, vol. 39, no. 11, pages 2436-2449, XP002152004 ISSN: 1053-587X cité dans la demande**
• **MEWE H ET AL: "A COMPARISON OF VARIOUS HIGH RESOLUTION SPECTRAL ESTIMATION TECHNIQUES IN RADIO DIRECTION FINDING (EIN VERGLEICH VERSCHIEDENER HOCHAUFLOESENDER SPEKTRALSCHAETZMETHODEN IN DER FUNKPEILTECHNIK)" FREQUENZ,DE,SCHIELE UND SCHON GMBH. BERLIN, vol. 50, no. 1/02, 1996, pages 28-34, XP000580294 ISSN: 0016-1136**

EP 1 259 833 B1

## Description

La présente invention concerne un procédé de localisation de sources radioélectriques au moyen d'un radiogoniomètre haute résolution deux voies, la goniométrie ayant lieu à partir d'un réseau antennaire comportant plusieurs antennes.

Un système de radiogoniométrie classique a pour objectif d'estimer les angles d'arrivées d'ondes radioélectriques incidentes sur un réseau de capteurs. Pour cela un réseau de N capteurs est couplé à un dispositif de calcul par l'intermédiaire de N récepteurs afin d'estimer les angles d'incidence $\theta_p$ des ondes radioélectriques émises par différentes sources et reçues sur le réseau.

L'intérêt de mettre en oeuvre autant de capteurs que de récepteurs est que cela permet d'acquérir les signaux $x_1(t)$ jusqu'à $X_N(t)$ fournis par chacun des capteurs du réseau à un même instant t.

Les méthodes de goniométrie utilisées sont des méthodes hautes résolution à l'ordre 2. Elles consistent à effectuer une estimation des incidences $\theta_m$ des sources basées sur l'estimation de la matrice de covariance $R_x$ d'un vecteur x(t) formé des composantes $X_1(t)....X_N(t)$ défini par la relation :

$$R_x = E[\underline{x}(t)\underline{x}(t)^\dagger] \qquad (1)$$

où E[.] désigne l'espérance mathématique et † désigne le transposé et conjugué du vecteur $\underline{x}(t)$. Sur une durée d'observation T des signaux xn(t), l'estimateur $\hat{R}_x$ de $\hat{R}_x$ est calculé par la relation :

$$\hat{R}_x = \frac{1}{T} \sum_{t=t_0}^{t_0+T} \underline{x}(t) \, \underline{x}(t)^\dagger \qquad (2)$$

Les termes $r_{ij}=\hat{R}_x(i,j)$ de la $i^{ème}$ ligne et la $j^{ème}$ colonne de la matrice de covariance $\hat{R}_x$ sont obtenus par la relation:

$$r_{ij} = \frac{1}{T} \sum_{t=t_0}^{t_0+T} x_i(t) \, x_j(t)^\star \qquad (3)$$

dans laquelle $x_j(t)^*$ désigne le conjugué du signal $x_j(t)$.

La matrice de covariance $R_x$ et de ses termes $r_{ij}$ permettent d'obtenir tous les déphasages possibles $\varphi_{ij}$ entre les capteurs i et j.

Les méthodes de goniométrie utilisant la matrice de covariance ont la propriété de rendre maximum ou minimum un pseudo-spectre en fonction de l'angle d'incidence $\theta$ pour estimer les incidences $\theta_m$ des sources avec $1 \leq m \leq M$ tel que :

$$Pseudo(\theta) = \underline{a}(\theta)^\dagger \, Proj \, \underline{a}(\theta) \qquad (4)$$

Le projecteur Proj dépend des méthodes de traitement mises en oeuvre. Il est classique de classer ces méthodes en trois catégories, une première catégorie dénommée "méthode de formation de voies, une deuxième catégorie dénommée " méthode CAPON" et enfin une troisième méthode dénommée "MUSIC".

La méthode par formation de voies permet de réaliser la goniométrie d'une seule source à la fois. L'angle d'incidence de la source est déterminé en utilisant la matrice de covariance comme projecteur et en recherchant les coordonnées du maximum du pseudo - spectre.

La méthode "CAPON" permet d'effectuer une goniométrie sur plusieurs sources à la fois en utilisant comme projecteur la matrice de covariance inverse $R_x^{-1}$ et en recherchant pour le calcul des angles d'incidence les coordonnées pour lesquelles le pseudo - spectre est minimum.

La méthode "MUSIC" permet d'effectuer une goniométrie de plusieurs sources à la fois en utilisant un projecteur de bruit calculé à partir d'une EVD de la matrice de covariance Rx et en recherchant pour le calcul des angles d'incidences les coordonnées des minima du pseudo - spectre.

Pour qu'un système de radiogoniométrie du type de ceux qui viennent d'être décrits puisse fonctionner correctement, les N récepteurs doivent avoir des caractéristiques de transmission parfaitement identiques. Cependant étant donnée la nature analogique de ceux-ci, cette condition n'est en pratique jamais réalisée, c'est pourquoi il est adjoint au processus de goniométrie une procédure de tarage. La procédure de tarage a pour fonction d'estimer N-1 filtres de tarage $F_n$ couplés à chaque récepteur.

Mais ce processus oblige à estimer les filtres $F_n$ à chaque changement de gain et de fréquence des récepteurs. Ce traitement est relativement compliqué à mettre en oeuvre et augmente le coût des réalisations.

Contrairement à la plupart des radio-goniomètres connus à haute résolution qui comportent autant de récepteurs que d'antennes et où le nombre d'antennes détermine le nombre de récepteurs et donc fa coût financier du système de réception, l'un des buts de invention est de diminuer ce coût matériel en n'utilisant que deux récepteurs pour un même nombre déterminé d'antennes qui peut être largement supérieur à 2 d'où le nom de système deux voies qui est utilisé par la suite.

Bien que des systèmes de radiogoniométrie n'utilisant que deux récepteurs soient également connus, ceux-ci ne peuvent effectuer une goniométrie que d'une seule source à la fois du fait de l'algorithme utilisé qui est de type interférométrique. De tels systèmes sont notamment commerciales par la demanderesse sous la référence TRC8000 des produits de son catalogue. Ils sont principalement destinés à la surveillance du spectre radioélectrique dans les gammes HF et V/UHF. Mais ces systèmes ne conviennent plus lorsqu'ils se trouvent soit en présence de multi émissions lorsque la densité d'émetteurs à surveiller est trop importante comme c'est souvent le cas dans la gamme HF, soit lorsque le canal de propagation de l'onde émise par un émetteur est perturbée et lui fait suivre des trajets multiples. Dans ces conditions les systèmes de goniométrie deux voles classiques présentent des dysfonctionnements.

Le document DE 4407716A divulgue un procédé de goniométrie réalisé à partir de deux réseaux linéaires non co-linéaires de N voies.

Dans le document DE 3639057C, la deuxième voie de réception est composée d'un signal de référence qui est connu. Le procédé exécute une simple corrélation entre le signal de référence et le signal reçu sur une des antennes.

Le document EP A0847161 décrit un système de goniométrie multivoies composé de plus de deux voies.

Le but de l'invention est de réaliser une goniométrie multl-sounces avec un système de réception deux voies ne comportant pas les Inconvénients précités.

A cet effet, l'invention a pour objet, un procédé de localisation de sources radioélectriques au moyen d'un radiogoniomètre haute résolution deux voies comportant un réseau d'un nombre déterminé N de capteurs caractérisé en ce qu'il comporte au moins les étapes suivantes :

* multiplexer les signaux fournis par les N capteurs sur les entrées de deux récepteurs ,
* estimer la matrice de covariance des signaux fournis par les deux récepteurs par la calcul d'intercorrélations successives respectivement entre les signaux multiplexés au travers du premier récepteur et le signal fourni par un capteur de référence et obtenu en sortie du deuxième récepteur,
* estimer les angles d'arrivée des ondes émises par les sources à partir d'une estimation de la matrice de covariance estimée.

L'invention a également pour objet un radiogoniomètre pour la mise en oeuvre du procédé- Il est caractérisé en ce qu'il comporte deux récepteurs couplés respectivement aux N capteurs du réseau au travers d'un multiplexeur et à un capteur de référence et un dispositif de calcul couplé aux sorties des deux récepteurs adapté à estimer la matrice de covariance des signaux fournis par les deux récepteurs par le calcul d'intercorrélations successives respectivement entre les signaux multiplexés au travers du premier récepteur et le signal fourni par le capteur de référence et obtenu en sortie du deuxième récepteur et estimer les angles d'arrivée des ondes émises par les sources à partir d'une estimation de la matrice de covariance estimée.

D'autres caractéristiques et avantages de l'invention apparaîtront à partir de la description qui suit faite en regard des dessins annexés qui représentent :

- La figure 1 un premier mode de réalisation d'un radiogoniomètre n'utilisant que deux voies de réception selon l'invention;
- La figure 2 un chronogramme des périodes d'acquisition du signal sur chacune des voies de réception du radiogoniomètre de la figure 1.
- La figure 3 un schéma synoptique de réception des signaux sur chacune des voies.
- La figure 4 un chronogramme des différentes intercorrélations effectuées sur chacune des voies.
- Les figures 5 et 6 un pseudo spectre de fréquence obtenu pour deux sources d'incidences θ1 et θ2.
- La figure 7 un pseudospectre obtenu pour deux sources en utilisant l'algorithme MUSIC.
- la figure 8 l'adjonction d'un filtre de tarage à la sortie d'un des deux récepteurs du radiogoniomètre selon l'invention.

- Les figures 9 et 10 des variantes de réalisation du radiogoniomètre de la figure 1.
- La figure 11 un deuxième mode de réalisation d'un radiogoniomètre multivoies opérant par sélection de couples de capteurs sur seulement deux voies de réception.
- La figure 12 un chronogramme montrant les périodes d'acquisition du signal par le radiogoniomètre de la figure 11.
- La figure 13 un schéma illustrant le fonctionnement du radiogoniomètre de la figure 11.
- La figure 14 un schéma temporel de reconstitution de la matrice de covariance temporelle.
- La figure 15 un schéma pour illustrer la méthode de calcul des coefficients de la matrice de covariance.
- La figure 16 un chronogramme illustrant le calcul d'une matrice de corrélation réduite dans le cadre d'une goniométrie multicapteurs par couple de capteurs.
- La figure 17 le schéma de commutation d'un réseau de capteurs pentagonal utilisant le procédé de goniométrie par couple de capteurs.
- Les figures 18 et 19, un pseudospectre obtenu dans une goniométrie à deux sources.
- Les figures 20 et 21 des configurations de réseaux équivalents.
- Les figures 22 et 23 des pseudospectres obtenus pour deux sources en utilisant un algorithme indirect à maximum de vraisemblance.
- La figure 24 une transformation d'un réseau de capteurs pentagonal grande base et petite base en réseau de 10 capteurs.
- La figure 25 un diagramme des temps pour illustrer les calculs d'intercorrélation sur des signaux non stationnaires.

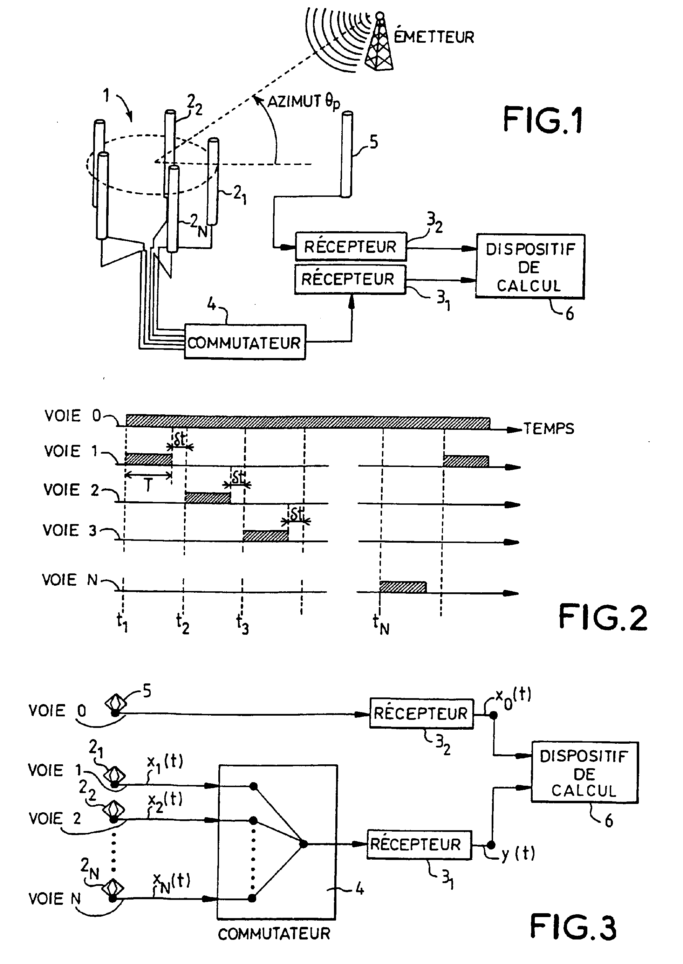

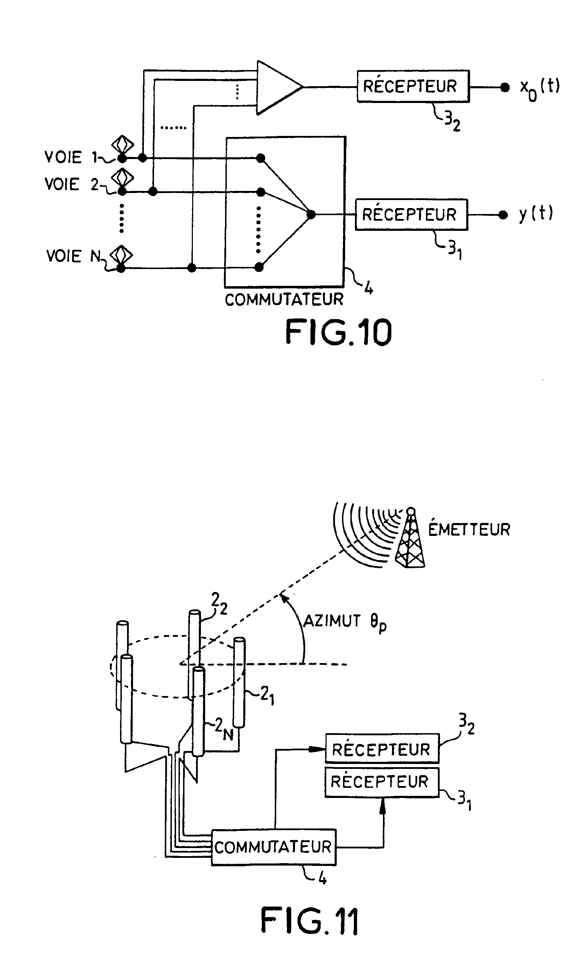

Le procédé selon l'invention qui est décrit ci après peut s'appliquer indifféremment sur deux systèmes d'acquisition différents qui sont des variantes d'exécution l'une de l'autre, un premier système représenté aux figures 1 et 3 qui acquiert le signal avec une voie de référence et un deuxième système représenté aux figures 10 et 11 qui acquiert le signal par couple de capteurs de capteurs.

Le premier système d'acquisition qui est montré à la figure 1 comporte un réseau 1 formé de N capteurs $2_1$ à $2_N$ couplés à l'entrée d'un récepteur $3_1$, par l'intermédiaire d'un commutateur 4 et un capteur 5 couplé à l'entrée d'un deuxième récepteur $3_2$. Un dispositif de calcul 6 des angles d'arrivée des ondes radioélectriques transmises par des émetteurs éloignés 7i sur le réseau 1 est couplé aux sorties des deux récepteurs $3_1$ et $3_2$. Dans ce système, le commutateur 4 multiplexe les signaux provenant des capteurs $2_n$ à $2_N$ pour les appliquer successivement à l'entrée du récepteur $3_1$ tandis que le deuxième récepteur $3_2$ est couplé en permanence sur le capteur de référence 5. Dans ce qui suit "voie 0" désigne la liaison entre le capteur de référence 5 et le récepteur $3_2$ et respectivement par voies 1 à N les N liaisons existantes entre les capteurs $2_1$ à $2_N$ et le commutateur 4. En considérant un temps de commutation $\delta t$ non nul, le multiplexage des signaux acquis par chacune des voies est représenté sur le chronogramme de la figure 2, d'où il apparaît que le signal reçu sur le récepteur $3_2$ est occupé constamment par le signal de la voie de référence (Voie 0) et celui du récepteur $3_1$ est occupé alternativement pendant un intervalle de temps déterminé T par les signaux des voies du réseau allant de 1 à N. Un schéma synoptique correspondant des signaux à la réception est montré à la figure 3 où les éléments homologues à ceux de la figure 1 sont représentés avec les mêmes références.

Sur la figure 3, le signal y(t) obtenu en sortie du récepteur $3_1$ est formé successivement des signaux $x_1(t)$, $x_2(t)$ jusqu'à $X_N(t)$ acquis sur chacune des voies et transmis par le commutateur 4 à l'entrée du récepteur $3_1$. Dans ce mode de réalisation, il est préférable que le capteur de référence 5 soit formé par une antenne de même type que les capteurs du réseau pour obtenir le même diagramme de rayonnement et ainsi être adapté aux mêmes signaux.

Pour déterminer les angles d'incidence des ondes radioélectriques appliquées sur le réseau 1 une première méthode consiste à exécuter un algorithme du type maximum de vraisemblance du type décrit dans la thèse de M. P.Larzabal ayant pour titre: "Application du maximum de vraisemblance au traitement d'antenne: radio-goniométrie et poursuite de cibles" Université de Paris Sud ORSAY, Juin 1992MV. Pour cela le dispositif de calcul 6 est programmé pour effectuer l'intercorrélation des signaux entre la voie 0 de référence et la voie 1 à l'instant $t_1$ jusqu'à l'intercorrélation des signaux entre la référence et la voie N à l'instant $t_N$. N intercorrélations sont alors calculées par rapport à la voie 0 de référence sur une durée T ce qui donne les estimées suivantes :

$$\hat{r}_{n0} = \frac{1}{T}\sum_{t=t_n}^{t_n+T} x_n(t)x_0(t)* \qquad (5)$$

où $x_0(t)$ est le signal reçu sur le capteur de référence et $x_n(t)$ celui du $n^{ième}$ capteur. Lorsque la durée d'intégration se rapproche de l'infini, $\hat{r}_{n0}$ tend vers l'intercorrélation asymptotique $r_{n0}$ avec l'expression suivante :

$$r_{n0} = E[\, x_n(t)\, x_0(t)^* \,] \qquad\qquad (6)$$

où E[.] désigne l'espérance mathématique. Dans ce qui précède, il est à remarquer que $\hat{r}_{n0}$ est un estimateur de $r_{n0}$ et que la bonne estimation de ces intercorrélations dépend du temps d'intégration T. Dans les relations précédentes chaque signal $x_n(t)$ fourni par un capteur n et obtenu à partir de M sources est représentable par une expression de la forme :

$$x_n(t) = \sum_{m=1}^{M}\ a_n(\theta_m)\ s_m(t)\ + b_n(t) \qquad\qquad (7)$$

où $s_m(t)$ est l'amplitude complexe du signal de la $m^{ième}$ source et $a_n(\theta_m)$ la réponse du réseau de capteurs à une source d'incidence $\theta_m$ et $b_n(t)$ est le bruit additif sur le capteur "n". L'expression (7) vérifie encore la relation matricielle :

$$x_n(t) = \underline{a}_n^{\,T}\ \underline{s}(t) + b_n(t) \qquad\qquad (8)$$

où $\underline{a}_n^{\,T} = [a_n(\theta_1)\dots a_n(\theta_M)]$ et $\underline{s}(t) = [\,s_1(t)\dots s_M(t)]^T$

Le vecteur signal sur tous les capteurs $\underline{x}(t) = [x_1(t)\dots x_N(t)]^T$ a pour expression matricielle :

$$\underline{x}(t) = A\ \underline{s}(t)\ + \underline{b}(t) \qquad\qquad (9)$$

où

$$A = \begin{bmatrix} \underline{a}_1^{\,T} \\[6pt] \underline{a}_N^{\,T} \end{bmatrix} = \begin{bmatrix} \underline{a}(\theta_1)\dots\underline{a}(\theta_M) \end{bmatrix} \qquad \text{et} \qquad \underline{a}(\theta) = \begin{bmatrix} a_1(\theta) \\ \vdots \\ a_N(\theta) \end{bmatrix}$$

où $\underline{a}(\theta)$ est un vecteur directeur qui représente la réponse du réseau de capteurs à une source d'incidence $\theta$.

D'après (8) et en supposant que le niveau des sources incidentes n'a pas changé aux instants $t_n$ de commutation, il apparaît que toutes les intercorrélations dépendent de la même matrice de covariance des sources $R_s = E[\,\underline{s}(t)\ \underline{s}(t)^\dagger]$ tel que :

$$r_{n0} = \underline{a}_n^{\,T}\ R_s\ \underline{a}_0^{\,*} \qquad \text{pour} \qquad 1 \leq n \leq N \qquad\qquad (10)$$

où $\underline{s}(t)$ désigne le vecteur source.

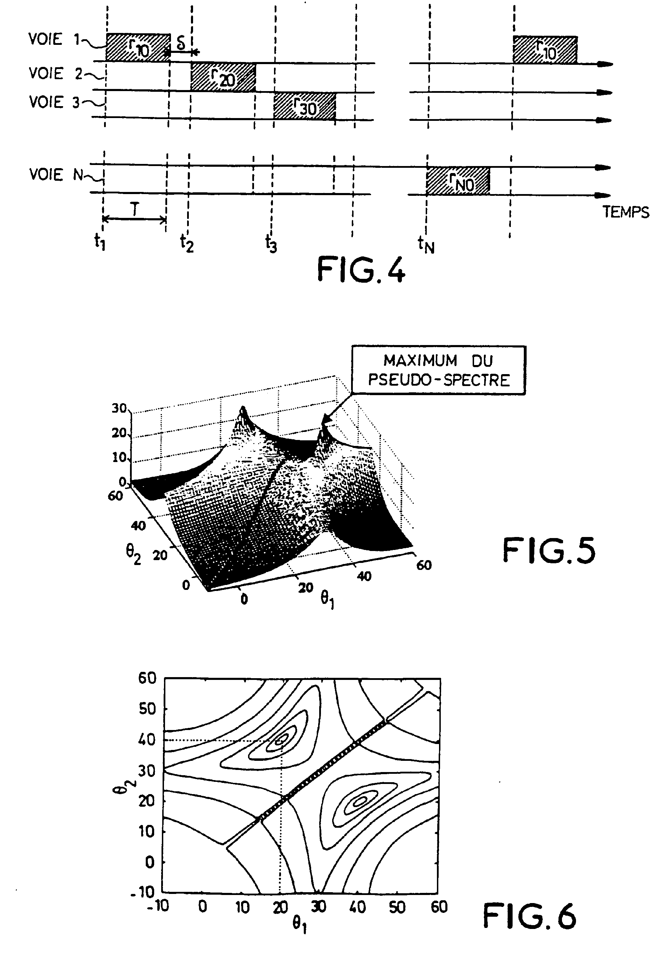

Un chronogramme rassemblant l'ensemble de ces intercorrélations est montré à la figure 4.

En concaténant l'ensemble des intercorrélations $r_{no}$ pour les rassembler dans un même vecteur $\underline{r}$ et en tenant compte de la relation (15) ainsi que de l'expression de la matrice A dans la relation (9), le vecteur r est défini par la relation :

$$\underline{r} = \begin{bmatrix} r_{10} \\ \vdots \\ r_{N0} \end{bmatrix} = \begin{bmatrix} \underline{a}_1^T R_s \underline{a}_0^* \\ \vdots \\ \underline{a}_N^T R_s \underline{a}_0^* \end{bmatrix} = A\, R_s\, \underline{a}_0^* = A\, \alpha \qquad (11)$$

Sachant que $A=[\underline{a}(\theta_1) \ldots \underline{a}(\theta_M)]$, il apparaît que $\underline{r}$ est une simple combinaison linéaire des vecteurs directeurs $\underline{a}(\theta_m)$ des M sources incidentes telle que :

$$\underline{r} = \begin{bmatrix} r_{10} \\ \vdots \\ r_{N0} \end{bmatrix} = \sum_{m=1}^{M} {}_m\, \underline{a}(\theta_m) \qquad (12)$$

où $\alpha_m$ est la $m^{\text{ième}}$ composante du vecteur $\alpha = R_s\, \underline{a}_0^*$.

Le problème de la goniométrie deux voies mis en oeuvre par l'invention apparaît donc équivalent à celui d'une goniométrie classique utilisant un seul échantillon temporel. Cette constatation montre que la méthode MUSIC peut être appliquée pour effectuer une goniométrie d'au maximum une source. Dans l'état de l'art actuel , sans a priori sur le réseau, la seule solution pour effectuer une goniométrie de plusieurs sources est d'appliquer une méthode du type maximum de vraisemblance ou Weighting Subspace Fitting (WSF) du type décrit par exemple dans l'article de M.Viberg , B.Ottersten and T.Kailath « Détection and estimation in sensor arrays using Weigthed Subspace Fitting » IEEE trans on signal processing , Vol 39, n°11 , November 1991.

Ainsi, après avoir normalisé le vecteur $\underline{r}$ en $\tilde{r}$, les angles d'incidence des sources sont obtenus en recherchant le $M^{\text{uplet}}$ $(\theta_1 \ldots \theta_M)$ qui rend minimum le critère:

$$J(\theta_1 \ldots \theta_M) = \text{trace}[(I - A(\theta_1 \ldots \theta_M)(A(\theta_1 \ldots \theta_M)^\dagger A(\theta_1 \ldots \theta_M))^{-1} A(\theta_1 \ldots \theta_M)^\dagger)\, \tilde{r}\, \tilde{r}^{\,\dagger}]$$
$$(13)$$

en utilisant par exemple l'algorithme connu de Gauss-Newton du maximum de vraisemblance en azimuth et en site tel que décrit aux annexes A et B.

Comme $\tilde{r}$ est normalisé, ce critère varie entre 0 et 1 et atteint 0 pour le $M^{\text{uplet}}$ recherché.

Un exemple d'obtention d'un pseudo - spectre dans le cas d'une goniométrie de deux sources d'incidence $\theta_1 = 20\text{deg}$ et $\theta_2 = 40\text{deg}$ est représenté sur les figures 5 et 6.

Ce pseudo spectre contient des maxima pour des angles $\theta$ à environ (20°,40°) et symétriquement à (40°,20°) qui correspondent aux incidences des deux sources. Les maxima de ce pseudo-spectre apparaissent mieux sur la courbe iso-niveau de la figure 6.

Une deuxième méthode mise en oeuvre par l'invention met en oeuvre un algorithme du type MUSIC temporel.

Cette méthode consiste à accroître le nombre d'observations en calculant un vecteur d'intercorrélation $\underline{r}(\tau)$ tel que :

$$\underline{r}(\tau) = \begin{bmatrix} r_{10}(\tau) \\ \vdots \\ r_{N0}(\tau) \end{bmatrix} = \begin{bmatrix} \underline{a}_1^T R_s(\tau)\underline{a}_0^* \\ \vdots \\ \underline{a}_N^T R_s(\tau)\underline{a}_0^* \end{bmatrix} \qquad (14)$$

où

$$R_s(\tau) = E[\underline{s}(t)\,\underline{s}(t-\tau)^\dagger]$$

et

$$r_{n0}(\square) = E[x_n(\tau)\,x_0(t-\tau)^*]$$

Dans l'hypothèse souvent vérifiée où les signaux incidents ne varient pas en amplitude pendant la période d'observation, la matrice $R_s(\tau)$ ne dépend pas des instants $t_n$ de commutations et peut être mise en facteur dans l'expression (14). Le vecteur $\underline{r}(\tau)$ vérifie alors l'expression :

$$\underline{r}(\tau) = A\,R_s(\tau)\,\underline{a}_0{}^* = A\,\alpha(\tau) \qquad\qquad (15)$$

$$\underline{r}(\tau)=\begin{bmatrix} r_{10}(\tau) \\ \vdots \\ r_{NO}(\tau) \end{bmatrix} = \sum_{m=1}^{M} \alpha_m(\tau)\,\underline{a}(\theta_m)$$

A partir des différents $\underline{r}(\tau)$ la matrice de covariance est estimée en appliquant les relations :

$$R=\sum_{k=1}^{K} \underline{r}(\tau_k)\underline{r}(\tau_k)^\dagger \qquad\qquad (16)$$

$$\text{avec } R = A\,R_k\,A^\dagger \text{ où } R_k=\sum_{k=1}^{K} \underline{k}(\tau_k)\,\underline{k}(\tau_k)^\dagger \qquad\qquad (17)$$

La séparation des sources incidentes est ensuite obtenue en appliquant un algorithme de type MUSIC sur la matrice R en utilisant le vecteur directeur $\underline{a}(\theta)$ car $A=[\underline{a}(\theta_1)\,...\,\underline{a}(\theta_M)]$.

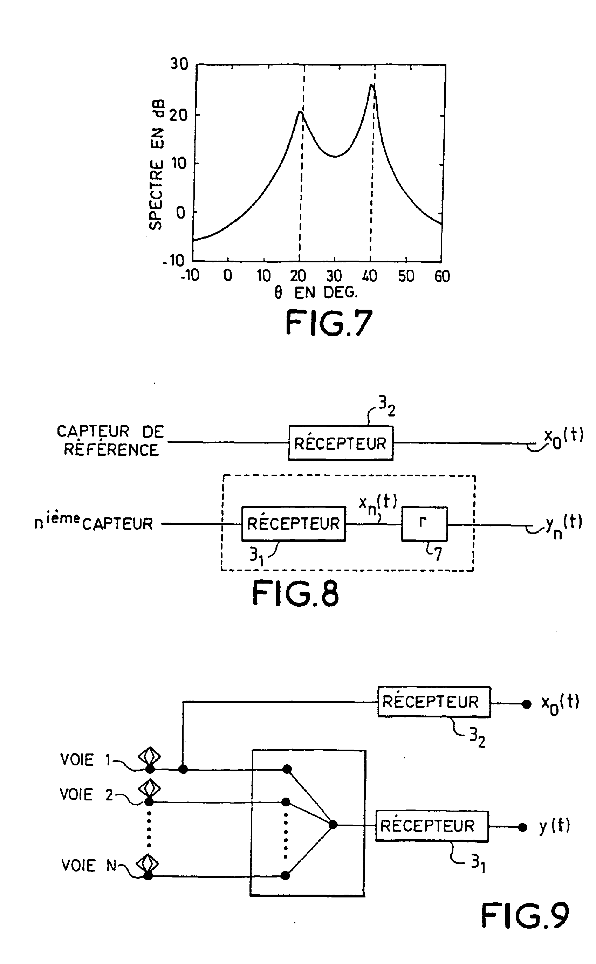

En reprenant l'exemple précédant avec 2 sources d'incidences 20° et 40° le pseudo-spectre obtenu est représenté à la figure 7. Cette figure montre que les 2 maxima ont des coordonnées angulaires $\theta1$ et $\theta2$ qui ne sont pas très éloignées des angles des sources incidentes.

Cette deuxième méthode n'est valable que si le rang de la matrice R est égal à M en présence de M sources. Cette condition est vérifiée en estimant au moins M vecteurs $\underline{r}(\tau_k)$ non colinéaires, cette colinéarité dépendant de la modulation des sources incidentes.

Dans le cas multi-émetteurs avec un trajet, et en considérant que les émetteurs sont par principe décorrélés, la matrice $R_s(\tau)$ est diagonale et les éléments de cette diagonale dépendent des réponses impulsionnelles $r_s{}^m(\tau)=E[s_m(t)S_m(t-\tau)^*]$ de chacun des émetteurs pour $1 \le m \le M$.

Ainsi les vecteurs $\underline{r}(\tau)$ de l'expression (15) deviennent :

$$\underline{\alpha}(\tau)=\text{diag}\{\ r_s{}^m(\tau)\ \}\ \underline{a}_0{}^*=\begin{bmatrix} r_s^1(\tau)\cdot a_0(\theta_1)* \\ \vdots \\ r_s^M(\tau)\ a_0(\theta_M)* \end{bmatrix} \tag{18}$$

Il s'en suit que cette deuxième méthode n'est plus valable lorsque les vecteurs $\underline{r}(\tau)$ et $\underline{r}(0)$ sont colinéaires et que par voie de conséquence les vecteurs $\alpha(\tau)$ et $\alpha(0)$ le sont aussi. Dès lors $\alpha(\tau)$ est égal à $\lambda\ \alpha(0)$ et selon (18) chaque émetteur vérifie :

$$r_s{}^m(\tau)\ a_0(\theta_m)*=\lambda r_s{}^m(0)a_0(\theta_m)* \tag{19}$$

D'après (19) la condition de non fonctionnement de la méthode devient :

$$r_s^m(\tau)=\frac{r_s^m(0)}{r_s^l(0)}r_s^l(\tau)=\gamma_m r_s^l(\tau) \tag{20}$$

Ainsi dans ce cas, les fonctions $r_s{}^m(\tau)$ sont égales à une amplitude $\gamma_m$ près, ce qui correspond à des signaux de même modulation et de même fréquence porteuse. A contrario, des signaux de même modulation sur des fréquences porteuses différentes ne vérifient plus la condition de non fonctionnement. Cette dernière remarque montre que la méthode MUSIC temporelle ne sera mise en défaut que très exceptionnellement en présence de modulations ayant la même forme d'onde, le même débit et la même fréquence porteuse.

En présence d'un seul émetteur de signal $s_0(t)$ et de plusieurs trajets, chaque trajet est modélisé par exemple par un retard de propagation $\tau_m$ et une atténuation $\rho_m$. Il en résulte que l'expression du signal $x_n(t)$ sur le capteur n de l'équation (7) devient :

$$x_n(t) = \sum_{m=1}^M\ a_n(\theta_m)\ s_m(t)\ + b_n(t) \qquad \text{avec} \qquad s_m(t)= \rho_m\ s_0(t\text{-}\tau_m) \tag{21}$$

La matrice $R_s(\tau)$ dépend dans ce cas de la réponse impulsionnelle $r_s{}^0(\tau)=E[s_0(t)s_0(t\text{-}\tau)*]$ du signal émis $s_0(t)$. Ainsi l'élément de la $i^{\text{ème}}$ ligne et $j^{\text{ème}}$ colonne de la matrice $R_s(\tau)$ prend l'expression suivante :

$$R_s(\tau)(i,j)= \rho_i\ \rho_j{}^*\ r_s{}^0(\tau+\tau_j\text{-}\tau_i) =\ \gamma_{ij}\ r_s{}^0_i(\tau+\tau_j\text{-}\tau_i) \tag{22}$$

Comme il a été indiqué ci-dessus, la méthode MUSIC temporel n'est plus applicable lorsque les vecteurs $\alpha(\tau)$ et $\alpha(0)$ sont colinéaires. Sachant que $\alpha(\tau)=Rs\ (\tau)\ \underline{a}_0{}^*$, et d'après (22), $\alpha(\tau)=\lambda\alpha(0)$ lorsque :

$$\sum_{j=1}^M\ \gamma_{ij}\ r_s{}^0((\tau+\tau_j\text{-}\tau_i\ )\ a_0(\theta_j)^* = \lambda\ \sum_{j=1}^M\ \gamma_{ij}\ r_s{}^0(\tau_j\text{-}\tau_i)\ a_0(\theta_j)^* \tag{23}$$

ce qui implique des émetteurs indépendants possédant la même forme d'onde, le même débit et une même porteuse et de plus que les trajets de propagation arrivent aux mêmes instants. Ces conditions ne sont remplies que très exceptionnellement.

De même que dans les radiogoniomètres multi-voies de l'art antérieur pour pallier au fait que les deux récepteurs $3_1$ et $3_2$ ne sont pas parfaitement identiques, il est alors adjoint, à un des deux récepteurs, un filtre 7 de tarage qui modélise la distorsion entre les deux récepteurs figure 8.

Sur cette figure 8, le signal $Y_n(t)$ obtenu à la sortie du récepteur 32 est convolué au signal $Xn(t)$ sortant du récepteur par la réponse du filtre 7. En tenant compte de l'équation (2) les signaux $x_n(t)$ et $y_n(t)$ vérifient alors les relations :

$$x_n(t) = \underline{a}_n^T \underline{s}(t) + b_n(t) \quad \text{et} \quad y_n(t) = \underline{a}_n^T \underline{s}_F(t) + b_n(t) \tag{24}$$

où le vecteur signal $\underline{s}_F(t)$ est égal au produit de convolution du vecteur signal $\underline{s}(t)$ par la réponse impulsionnnelle du filtre F.

Dans ce contexte, pour ne pas réaliser de tarage, il suffit d'utiliser le signal $y_n(t)$ au lieu du signal $x_n(t)$. Ainsi l'intercorrélation $c_{n0}$ entre les signaux $y_n(t)$ et $x_0(t)$ a pour expression :

$$c_{n0} = \underline{a}_n^T R_{sF} \underline{a}_0^* \quad \text{avec } R_{sF} = E[\underline{s}_F(t) \underline{s}(t)^\dagger] \tag{25}$$

D'après l'expression (25), le vecteur $\underline{c}$ qui contient toutes les intercorrélations avec le capteur de référence a l'expression suivante :

$$\underline{c} = \begin{bmatrix} c_{10} \\ \vdots \\ c_{N0} \end{bmatrix} = A\, R_{sF}\, \underline{a}_0^* \tag{26}$$

L'équation (26) ayant la même structure que l'équation (11), il peut être appliqué un algorithme de type maximum de vraisemblance sur $\underline{c}$. De même, le remplacement des signaux $x_n(t)$ par les signaux $y_n(t)$ rend également applicable une méthode du type MUSIC temporel. Ces remarques montrent qu'un goniomètre 2 voies avec une voie de référence peut fonctionner sans effectuer de tarage.

Lorsque le bruit additif $b_n(t)$ provient des récepteurs, il est décorrélé entre les voies. En particulier, il l'est du bruit $b_0(t)$ de la voie de référence qui peut être éliminé des équations (10)(15) et (25). Ceci permet de mettre en oeuvre ces algorithmes à faible rapport signal sur bruit.

Naturellement, les méthodes décrites ci dessus nécessitent l'installation d'un capteur de référence du même type ou sensiblement identique que les capteurs du réseau. Dans la gamme HF, il est facile de disposer un cadre croisé supplémentaire au centre du réseau. Dans la gamme V/UHF le réseau de capteurs est fixé sur une structure rigide, ce qui conduit à installer ce capteur supplémentaire au sein de cette structure. Par exemple en V/UHF où il est courant d'utiliser un réseau pentagonal de dipôles reliés à un mât par des bras métalliques, l'idéal est d'installer le capteur de référence au centre à la place ou au sommet du mât. Deux alternatives à l'installation d'un capteur de référence apparaissent également possible la première alternative consiste à prendre comme capteur de référence un des capteurs du réseau.

Mais lorsqu'il est difficile d'installer un capteur de référence les algorithmes ci-dessus restent applicables en choisissant comme capteur de référence un des capteurs du réseau comme l'indique le schéma de la figure 10. Si le bruit provient uniquement des récepteurs, l'intercorrélation du capteur 1 sur la voie 1 avec ce même capteur sur la voie 2 ne sera pas affectée d'une composante de bruit. Ainsi le vecteur de l'équation (11) devient :

$$\underline{r} = \begin{bmatrix} r_{11} \\ r_{21} \\ \vdots \\ r_{N1} \end{bmatrix} = A\ R_s\ \underline{a}_1{}^* \qquad (27)$$

L'équation (15) de la méthode MUSIC temporel devient :

$$\underline{r}(\tau) = \begin{bmatrix} r_{11}(\tau) \\ r_{21}(\tau) \\ \vdots \\ r_{N1}(\tau) \end{bmatrix} = A\ R_s(\tau)\ \underline{a}_1{}^* \qquad (28)$$

et les algorithmes du Maximum de Vraisemblance et MUSIC temporel 2 voies restent applicables.

Comme les différents capteurs peuvent dans ce cas recevoir le signal d'une direction donnée avec des niveaux différents, l'idéal serait de prendre comme référence le capteur recevant le plus fort niveau de signal. Cependant lorsque le niveau du signal sur les capteurs dépend de la direction de la source, le signal obtenu sur ce capteur de référence risque de changer en fonction des incidences des sources.

Pour contourner ce problème, une alternative consiste à réaliser un capteur de référence en combinant les signaux reçus sur les différents capteurs. Ceci peut être obtenu par une préformation de voie consistant par exemple à additionner les signaux provenant des différents capteurs comme l'indique le schéma de la figure 10.

Suivant le deuxième mode de réalisation d'un radiogoniomètre selon l'invention qui est représenté à la figure 11 où les éléments homologues à ceux de la figure 1 sont représentés avec les mêmes références, le système de goniométrie commute n'importe qu'elle couple de capteurs sur les deux voies de réception. La goniométrie peut alors être réalisée soit par une reconstitution de toute la matrice de covariance ou en n'en reconstituant qu'une partie seulement pour diminuer le temps de traitement.

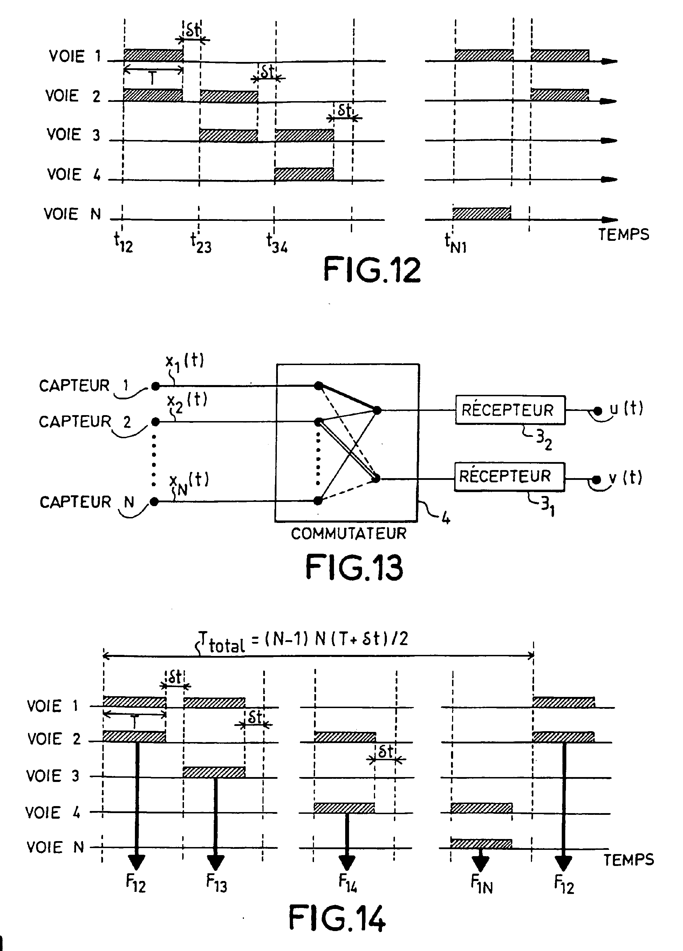

Le commutateur 4 a pour rôle de connecter deux capteurs du réseau sur les deux voies de réceptions en ne choisissant jamais deux fois le même capteur. Ce système peut être utilisé par exemple sur les réseaux d'antennes pentagonaux des radiogoniomètres de la gamme V/UHF où les commutations se font soit sur les petites bases ou grandes bases du réseau. Un chronogramme des périodes d'acquisition du signal est représenté à la figure 12.

Ce chronogramme correspond au fonctionnement du commutateur 4 schématisé à la figure 13 d'où il apparaît que les signaux v(t) et u(t) obtenus en sortie des récepteurs $3._1$ et $3._2$ peuvent être formés alternativement par les signaux $x_i(t)$, $x_2(t)$ jusqu'à $x_N(t)$.

En utilisant le système d'acquisition précédent, la matrice de covariance $R_x$ de l'équation (1) peut être reconstituée. Pour cela tous les termes $r_{ij}$ de la $i^{\text{ième}}$ ligne et $j^{\text{ième}}$ colonne de $R_x$ sont estimés à partir des instants $t_{ij}$ et sur une durée T comme l'indique le chronogramme de la figure 14.

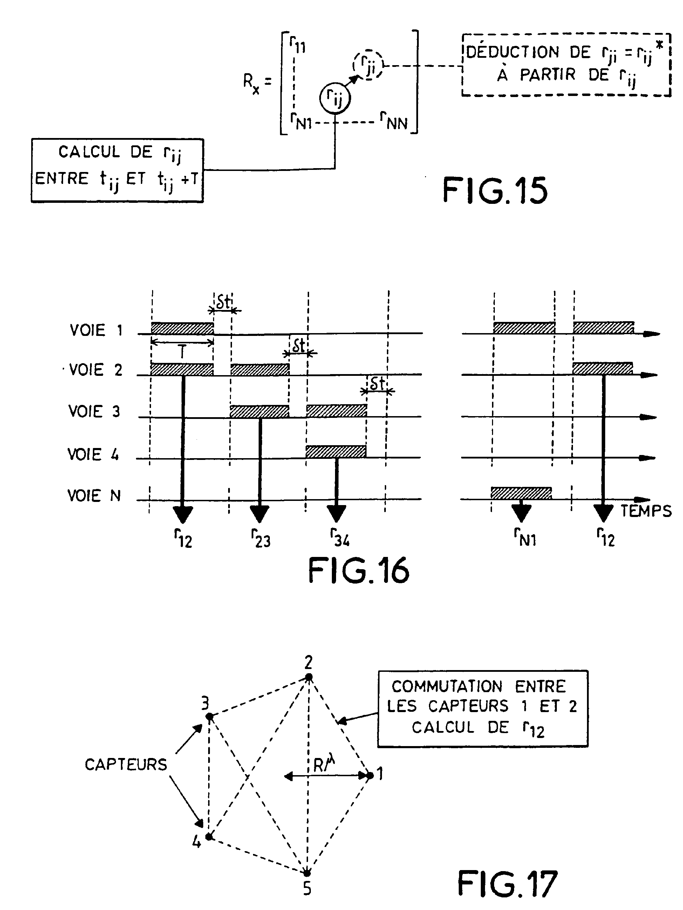

Pour estimer la matrice $R_x$, il suffit de calculer la partie triangulaire inférieure de cette matrice comme l'indique la figure 15. Ainsi après avoir calculé le terme $r_{ij}$, $r_{ji}$ s'en déduit par la relation $r_{ji}=r_{ij}{}^*$. Sur un réseau à N capteurs il suffit ainsi de réaliser N(N-1)/2 commutations. Ainsi pour une goniométrie élémentaire le signal peut être observé sur une durée $T_{total}=N(N-1)(T+\delta t)/2$. En conséquence avec N=5 capteurs il suffit de réaliser 10 commutations.

La matrice $R_x$ ainsi estimée permet d'appliquer n'importe qu'elle méthode de goniométrie haute résolution. A la différence cependant de la goniomètre classique où les intercorrélations $r_{ij}$ sont toutes estimées à partir du même instant $t_0$, celles-ci ont lieu aux instants $t_{ij}$ dans le cas présent.

Il est à noter que les opérations précédentes peuvent être réalisées indifféremment sans ou avec tarage suivant la durée d'observation des signaux sur les différents capteurs.

Si comme indiqué ci-dessus $r_{ji}$ est déduit de $r_{ij}$ par la relation $r_{ji}=r_{ij}{}^*$, sans tarage ces corrélations deviennent d'après (25) :

$$r_{ij} = \underline{a}_i^{\ T} R_{sF} \, \underline{a}_j^{\ *} \qquad et \qquad r_{ji} = \underline{a}_j^{\ T} R_{sF}^{\ \dagger} \, \underline{a}_i^{\ *} \qquad\qquad (29)$$

Comme la matrice $R_{sF}$ de corrélation du vecteur source $\underline{s}(t)$ avec $\underline{s}_F(t)$ n'est pas hermitienne la relation $R_{sF} = R_{sF}^{\dagger}$ n'est pas satisfaite et la matrice de covariance $R_x$ ne s'écrit pas sous la forme A $R_{sF}$ A$^{\dagger}$ comme le suppose les méthodes de goniométrie haute résolution. Dans ce cas il ne faut pas déduire $r_{ji}$ de $r_{ij}$ mais l'estimer sur une nouvelle commutation pour obtenir $r_{ji} = \underline{a}_j^{\dagger} R_{sF} \, \underline{a}_i^{\ *}$. En résumé sans tarage N(N-1) commutations sont à réaliser et avec tarage le nombre de commutations peut être réduit à N(N-1)/2. Sans tarage il est nécessaire d'observer le signal deux fois plus longtemps.

Le deuxième système d'acquisition selon l'invention qui est représenté à la figure 11 diffère du premier par le fait qu'il ne met en oeuvre qu'une partie seulement de la matrice de covariance, ce qui permet de réaliser des goniométries élémentaires sur une période plus courte.

Le traitement de goniométrie consiste à effectuer successivement des intercorrélations entre plusieurs couples de capteurs indicé par i et j et à utiliser une méthode de traitement basée sur l'algorithme du maximum de vraisemblance. En présence de N capteurs environ N intercorrélations différentes sont estimées sur une durée d'observation T et à partir d'un instant $t_{ij}$ dépendant du couple de capteur (i,j) choisit. Le coefficient $\hat{r}_{ij}$ vérifie alors la relations :

$$\hat{r}_{ij} = \frac{1}{T} \sum_{t=t_{ij}}^{t_{ij}+T} x_i(t) x_j(t)^* \qquad\qquad (30)$$

Lorsque le temps d'intégration T tend vers l'infini $\hat{r}_{ij}$ tend vers $r_{ij} = E[x_i(t) \, x_j(t)^*]$ qui a pour expression :

$$r_{ij} = \underline{a}_i^{\ T} R_s \, \underline{a}_j^{\ *} \qquad\qquad (31)$$

où $R_s = E[\underline{s}(t) \, \underline{s}(t)^{\dagger}]$ désigne la matrice de covariance des sources incidentes. Le calcul de ces intercorrélations a lieu suivant le diagramme des temps de la figure 16.

Ce calcul permet de constituer un vecteur $\underline{r}$ de longueur L contenant les intercorrélations $r_{ij}$. Pour cela le procédé consiste à construire des vecteurs I et J contenant les indices des capteurs se corrélant. Ainsi la première composante de $\underline{r}$ corrèle les capteurs I(1) et J(1) et calcule le terme $r_{I(1)J(1)}$. Le vecteur $\underline{r}$ a alors l'expression suivante :

$$\underline{r} = \begin{bmatrix} r_{I(1)J(1)} \\ \vdots \\ r_{I(L)J(L)} \end{bmatrix} \qquad\qquad (32)$$

En notant $\gamma_{mm'}$ le terme de m$^{\text{ième}}$ ligne et m'$^{\text{iéme}}$ colonne de $R_s$, le scalaire $r_{ij}$ puis le vecteur $\underline{r}$ deviennent d'après (31) et (32) :

$$r_{ij} = \sum_{m=1}^{M} \sum_{m'=1}^{M} \gamma_{mm'} \; a_i(\theta_m) \, a_j(\theta_{m'})^* \qquad\qquad (33)$$

$$\underline{r} = \sum_{m=1}^{M} \sum_{m'=1}^{M} \gamma_{mm'} \; \underline{a}_I(\theta_m) \bullet \underline{a}_J(\theta_{m'})^* \qquad\qquad (34)$$

$$\text{avec} \quad \underline{a}_I(\theta)=[a_{I(1)}(\theta) \ \dots \ a_{I(L)}(\theta)]^T \quad \text{et} \quad \underline{a}_J(\theta)=[a_{J(1)}(\theta) \ \dots \ a_{J(L)}(\theta)]^T$$

$\underline{a}_I(\theta)$ correspond au vecteur directeur associé aux capteurs indicé par 1 et $\underline{a}_J(\theta)$ à ceux indicé par les éléments de J. Le symbole «•» désigne le produit terme à terme des vecteurs. Le vecteur $\underline{r}$ est formé par une combinaison linéaire de au maximum $M^2$ vecteurs, et peut être écrit de la même façon que l'équation (11), soit :

$$\underline{r}=\begin{bmatrix} r_{I(1)J(1)} \\ \vdots \\ r_{I(L)J(L)} \end{bmatrix} = A_{IJ}(\theta_1,\dots,\theta_M)\gamma \qquad\qquad (35)$$

avec

$$A_{IJ}(\theta_1,\dots,\theta_M) = [\ \underline{a}_I(\theta_1) \bullet \underline{a}_J(\theta_1)^* \ \dots \ \underline{a}_I(\theta_m) \bullet \underline{a}_J(\theta_{m'})^* \ \dots \ \underline{a}_I(\theta_M) \bullet \underline{a}_J(\theta_M)^*]$$

et

$$\gamma = [\gamma_{11'} \ \dots \ \gamma_{1M} \ \gamma_{21'} \ \dots \ \gamma_{2M} \ \gamma_{M1'} \ \dots \ \gamma_{MM}]^T$$

La modélisation du vecteur $\underline{r}$ selon l'expression (35) permet d'appliquer un algorithme du type maximum de vraisemblance du type Gauss Newton décrit à l'annexe C. Ainsi après avoir normalisé le vecteur $\underline{r}$ en $\tilde{r}$, il suffit de chercher le $M^{uplet}$ $(\theta_1 \dots \theta_M)$ qui minimise le critère suivant :

$$J(\theta_1 \dots \theta_M)=\text{trace}[(I- A_{IJ}(\theta_1 \dots \theta_M)( A_{IJ}(\theta_1 \dots \theta_M)^\dagger A_{IJ}(\theta_1 \dots \theta_M))^{-1} A_{IJ}(\theta_1 \dots \theta_M)^\dagger) \ \tilde{r} \ \tilde{r}^\dagger]$$

$$(36)$$

Sachant que la matrice $A_{IJ}$ est de dimension $LxM^2$, cette méthode n'est applicable en théorie que lorsque $M^2$ est strictement inférieur au nombre de commutations L et en pratique à U2. Ainsi en utilisant un réseau de N = 5 capteurs comme c'est souvent le cas en V/UHF, il est possible en théorie de goniométrer au maximum 2 sources et en pratique 1 source. Toutefois en augmentant le nombre de commutation à 8, il devient possible d'effectuer la goniométrie de 2 sources. La simulation suivante montre le résultat d'un test de cette méthode sur un réseau pentagonal de rayon $R/\lambda$ normalisé par la longueur d'onde valant 0,55 où le nombre de capteurs vaut N=5. Le vecteur $\underline{r}$ est construit sur L=8 commutations tel que $\underline{r}=[\ r_{12} \ r_{23} \ r_{34} \ r_{45} \ r_{51} \ r_{24} \ r_{25} \ r_{35}]^T$. Sur la figure 17 le réseau de capteurs associé aux commutations I=[ 1 2 3 4 5 2 2 3] et J=[ 2 3 4 5 1 4 5 5] choisis dans cet exemple est représenté.

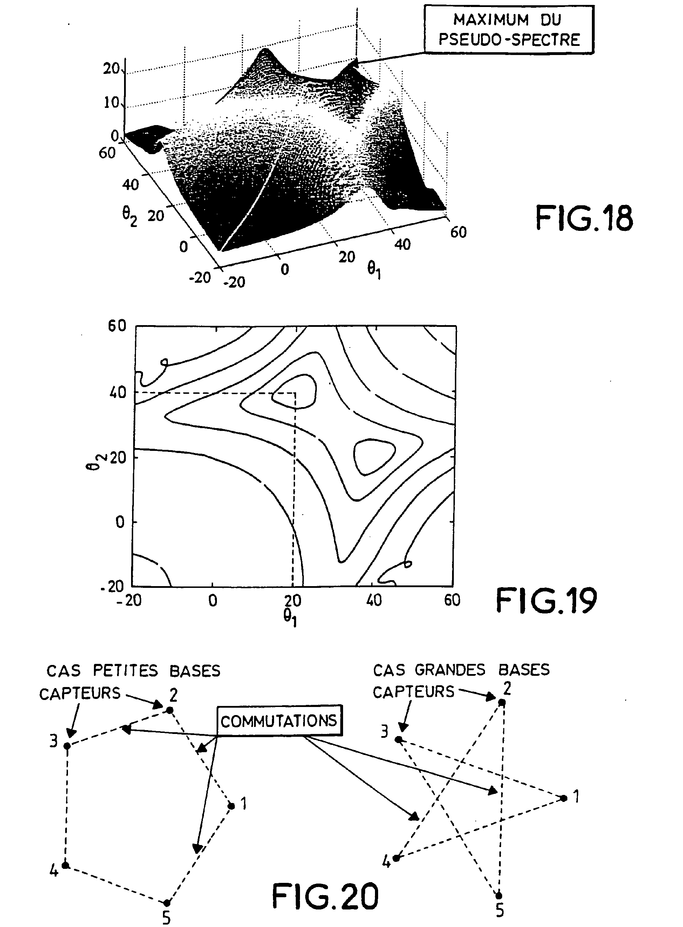

Cette simulation est celle de 2 sources BPSK comportant 10 échantillons par symbole, d'incidence $\theta_1$=20deg et $\theta_2$=40deg et de rapport signal sur bruit égal à 10dB. Les intercorrélations $r_{ij}$ sont estimées sur T=1000 échantillons. Le maximum de vraisemblance consiste à trouver le minimum de la fonction bidimensionnel $J(\theta_1,\theta_2)$ ou le maximum de $-10\log_{10}(J(\theta_1,\theta_2))$ comme représenté sur la figure 19. Cette figure montre que le spectre contient des maxima à environ $(20°,40°)$ et symétriquement à $(40°,20°)$ qui correspondent aux incidences des deux sources. Les maxima de ce spectre se visualisent mieux sur la courbe iso-niveau de la figure 19.

En présence de signaux décorrélés l'équation (34) devient :

$$\underline{r}=\sum_{m=1}^{M} \gamma_{mm} \ \underline{a}_{IJ}(\theta_m) \qquad\qquad (37)$$

où $\underline{a}_{IJ}(\theta)=\underline{a}_I(\theta)\bullet\underline{a}_J(\theta)^*$ est un vecteur directeur composite. Cette dernière équation est parfaitement équivalente à l'équation (12) sauf que le vecteur directeur $\underline{a}(\theta)$ a été remplacé par le vecteur $\underline{a}_{IJ}(\theta)$. Comme les performances de goniométrie au niveau ambiguité et résolution dépendent du vecteur directeur il est intéressant d'évaluer le réseau équivalent correspondant au vecteur directeur $\underline{a}_{IJ}(\theta)$.

La $n^{\text{ième}}$ composante $a_n(\theta)$ du vecteur $\underline{a}(\theta)$ est la réponse du capteur n à une source d'incidence θ. En désignant $(x_n,y_n)$ les coordonnées du capteur n dans le réseau le scalaire $a_n(\theta)$ a l'expression suivante :

$$a_n(\theta)= \exp(j2\pi/\lambda \ ( \ x_n \cos(\theta) + y_n \sin(\theta) \ ) \ ) \tag{38}$$

et la $l^{\text{ième}}$ composante du vecteur $\underline{a}_{IJ}(\theta)$ a pour expression :

$$a_{IJl}(\theta)=a_{I(l)}(\theta) \ a_{J(l)}(\theta)^*= \exp(j2\pi/\lambda( \ [x_{I(l)}- x_{J(l)}] \cos(\theta) + [y_{I(l)}- y_{J(l)}] \sin(\theta) \ ) \ ) \tag{39}$$

Cette expression montre que cette $l^{\text{ième}}$ composante peut être la réponse d'un capteur virtuel de coordonnées $(x_{I(l)}- x_{J(l)} , y_{I(l)}- y_{J(l)} )$. En efffectuant L commutations ceci est équivalent à utiliser L capteurs virtuels. En utilisant un réseau pentagonal traditional la commutation sur les petites bases consiste à prendre I=[1 2 3 4 5] et J=[2 3 4 5 1] et grandes bases 1=[1 2 3 4 5] et J=[3 4 5 1 2].

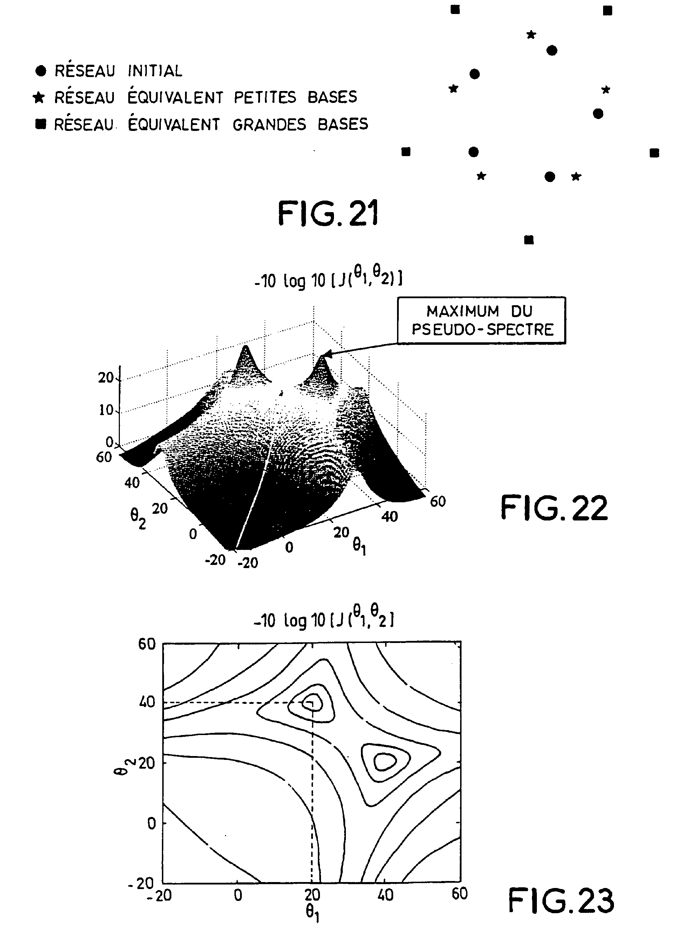

La figure 20 illustre ces deux catégories de commutations. Ainsi les réseaux équivalents petites bases et grandes bases ont la forme représentée figure 21 par rapport au réseau pentagonal initial.

Cette figure 21 montre que le réseau équivalent grandes bases est plus grand que celui en petites bases. Ainsi en commutant sur les grandes bases le traitement est plus précis. Toutefois il faut éviter que le rayon normalisé de ce réseau dépasse 0,8 pour ne pas être ambiguë, ce qui implique, qu'il ne peut pas être choisi n'importe quel jeu de commutations pour réaliser une goniométrie deux voies et qu'il est nécessaire de connaître à quel réseau équivalent correspondent ces commutations.

Pour effectuer un minimum de commutations, l'idéal est de commuter L=N capteurs . Toutefois dans le cas d'un réseau V/UHF avec 5 capteurs la méthode précédente a montré qu'il est difficile d'effectuer une goniométrie sur plus d'une source. Pour augmenter ce nombre de sources le processus suivant consiste à augmenter la taille de $\underline{r}$. Comme le nombre de commutations est limité, la taille de $\underline{r}$ est modifiée sans changer le nombre de commutations en exploitant la structure hermitienne de la matrice de covariance $R_s$ des sources. Dans ce cas l'intercorrélation $\gamma_{mm'}$ entre les sources m et m' vérifie :

$$\gamma_{mm'} \ = \gamma_{m'm}{}^* \tag{40}$$

D'après (34) et (40) on en déduit que le conjugué de $\underline{r}$ a l'expression suivante ;

$$\underline{r}^* = \sum_{m=1}^{M} \sum_{m'=1}^{M} \gamma_{mm'} \ \underline{a}_J(\theta_m) \bullet \underline{a}_I(\theta_{m'})^* \tag{41}$$

La différence par rapport à l'expression de $\underline{r}$ est que le vecteur directeur composite $\underline{a}_I(\theta_m) \bullet \underline{a}_J(\theta_{m'})^*$ est remplaçé par $\underline{a}_J(\theta_m) \bullet \underline{a}_I(\theta_{m'})^*$. D'après l'équation (35), l'expression matricielle de $\underline{r}^*$ devient :

$$\underline{r}^* = A_{JI}(\theta_1,\dots,\theta_M) \tag{42}$$

Ainsi, pour augmenter la taille de $\underline{r}$ sans augmenter le nombre de commutations le processus consiste à constituer un vecteur $\underline{v}$ tel que :

$$\underline{v} = \left[ \begin{smallmatrix} \underline{r} \\ \underline{r}^* \end{smallmatrix} \right] = \left[ \begin{smallmatrix} A_{IJ}(\theta_1...\theta_M) \\ A_{JI}(\theta_1...\theta_M) \end{smallmatrix} \right] \gamma = B_{JI}(\theta_1,...,\theta_M)\gamma \qquad (43)$$

La modélisation du vecteur $\underline{v}$ selon l'expression (43) permet d'appliquer un algorithme du type maximum de vraisemblance pour retrouver les incidences des sources. Ainsi après avoir normalisé le vecteur $\underline{v}$ en $\tilde{v}$, la méthode comporte une étape de recherche du $M^{uplet}$ ($\theta_1 ... \theta_M$) qui minimise le critère :

$$J(\theta_1 ... \theta_M) = trace[(I- B_{IJ}(\theta_1 ... \theta_M)( B_{IJ}(\theta_1 ... \theta_M)^\dagger B_{IJ}(\theta_1 ... \theta_M))^{-1} B_{IJ}(\theta_1 ... \theta_M)^\dagger) \; \tilde{v} \; \tilde{v}^\dagger]$$
$$(44)$$

Sachant que la matrice $B_{IJ}$ est de dimension $2LxM^2$, la méthode est applicable en théorie lorsque $M^2$ est strictement inférieur au nombre de commutations 2L et en pratique à L. Ainsi en V/UHF, en utilisant un réseau N=5 capteurs, il est possible en théorie de goniométrer au maximum 4 sources et en pratique 2 sources avec 5 commutations. Le résultat d'un test de cette méthode sur les grandes bases du réseau pentagonal de rayon $R/\lambda=0,55$ est représenté aux figures 22 et 23. Ces résultats ont été obtenus par le vecteur $\underline{r}$ sur L=5 commutations tel que $\underline{r}=[ r_{13} \; r_{24} \; r_{35} \; r_{45} \; r_{52}]^T$ puis on en déduit le vecteur $\underline{v}$ associé. Comme dans l'exemple précédent, 2 sources BPSK de temps symbole de 10 échantillons, d'incidence $\theta_1=20deg$ et $\theta_2=40deg$ et de rapport signal sur bruit égale à 10dB sont similés. Les intercorrélations $r_{ij}$ sont estimées sur T=1000 échantillons. Le maximum de vraisemblance est obtenu en cherchant le minimum de la fonction bidimensionnelle $J(\theta_1,\theta_2)$.

Les courbes des figures 22 et 23 font apparaître un maximum à environ (20˚,40˚) et symétriquement à (40˚, 20˚) ce qui correspond aux incidences des deux sources.

En présence de signaux décorrélés l'équation (43) devient :

$$\underline{v} = \sum_{m=1}^{M} \gamma_{mm'} \; \underline{b}_{IJ}(\theta_m) \qquad (45)$$

où $\underline{b}_{IJ}(\theta)=[\underline{a}_{IJ}(\theta)' \; \underline{b}_{JI}(\theta)^T]^T$ est un vecteur directeur composite. Cette dernière équation est parfaitement équivalente à l'équation (37) sauf que le vecteur directeur $\underline{a}_{IJ}(\theta)$ a été remplacé par $\underline{b}_{IJ}(\theta)$. Avec le même raisonnement que précédemment il est possible d'associer le vecteur directeur $\underline{b}_{IJ}(\theta)$ a un réseau équivalent composé de 2L capteurs. Dans ce cas on peut montrer que la $I^{ième}$ composante de $\underline{b}_{IJ}(\theta)$ est associée à un capteur virtuel de coordonnées $(x_{I(l)}-x_{J(l)} , y_{I(l)}-y_{J(l)})$ et sa $(I+L)^{ième}$ composante est associée au capteur de coordonnées $(-x_{I(l)}+ x_{J(l)} ,- y_{I(l)}+ y_{J(l)})$. Ainsi les réseaux équivalents petites bases et grandes bases d'un réseau pentagonal initial sont des réseaux circulaires comportant chacun 10 capteurs.

Dans la description des différents modes de réalisation de l'invention il a été supposé que l'amplitude du signal sur chacune des commutations est stationnaire. Dans ces conditions, quelque que soit la commutation (i,j) la matrice de covariance des sources $R_s$ de (11) (15) reste constante et :

$$r_{ij} = \underline{a}_i^T R_s \; \underline{a}_j^* \qquad (47)$$

Si l'amplitude du signal varie la matrice $R_s$ dépend alors de l'instant $t_{ij}$ du début d'acquisition de la commutation (i,j) et contrairement à l'expression (11) le vecteur $\underline{r}$ prend alors la forme :

$$\underline{r} = \begin{bmatrix} r_{10} \\ \vdots \\ r_{N0} \end{bmatrix} = \begin{bmatrix} \underline{a}_1 R_s(t_{10})\underline{a}_0{}^* \\ \vdots \\ \underline{a}_N R_s(t_{N0})\underline{a}_0{}^* \end{bmatrix} \neq A\,R_s\,\underline{a}_0{}^* = A\,\underline{k} \quad \text{si} \quad r_{ij} = \underline{a}_i{}^T R_s(t_{ij})\,\underline{a}j^* \qquad (48)$$

Comme $R_s$ est une fonction de $t_{ij}$ $R_s$ ne peut plus être mis en facteur dans l'expression (48). Mais pour que le même raisonnement suivi par l'établissement de l'expression (15) puisse s'appliquer, il faut que la matrice de covariance des sources $R_s$ reste constante c'est-à-dire que l'énergie des signaux reste constante sur une durée de LxT ( L : nombre de commutations et T : temps d'intégration sur une commutation). Ceci exige avant de réaliser une goniométrie 2 voies d'avoir une idée précise de la durée de stationnarité du signal en amplitude. Pendant cette durée toutes les commutations nécessaires pour appliquer une méthode de goniométrie 2 voies doivent être réalisées. Toutefois cette durée de stationnarité du signal n'est pas forcément compatible avec le temps d'intégration T sur chaque commutation nécessaire pour réaliser une goniométrie 2 voies. Ainsi pour intégrer sur T avec une durée de stationnarité de $D_s$ et un nombre de commutations valant L l'intégration suivante doit être réalisée :

$$r_{ij} = \frac{1}{K}\sum_{k=1}^{K} r_{ij}(k) \qquad \text{avec} \qquad r_{ij}(k) = \frac{1}{T_L}\sum_{t=t_{ij}}^{t_{ij}+T_L} x_i(t+kD_s)\,x_j(t+kD_s)^* \qquad (49)$$

avec :  
$D_s$ : Durée de stationnarité du signal  
L : Nombre de commutations  
$t_{ij}(0 < t_{ij} < D_s)$ : Instant initial d'intégration de la commutation (i,j)  
$T_L = D_s/L$ : Temps d'intégration élémentaire  
$T = K\,T_L$ : Temps d'intégration totale sur la commutation (i,j)

Si le signal est stationnaire en amplitude entre les instants $kD_s$ et $(k+1)D_s$ toutes les commutations (i,j) vérifierons la relation suivante :

$$\forall(i, j) \qquad r_{ij}(k) = \underline{a}_i{}^T R_s(k)\,\underline{a}j^* \qquad (50)$$

Et en conséquence l'expression (49) deviendra :

$$\forall(i, j) \qquad r_{ij} = \underline{a}_i{}^T R_s\,\underline{a}j^* \qquad \text{avec} \qquad R_s = \frac{1}{K}\sum_{k=1}^{K} R_s(k) \qquad (51)$$

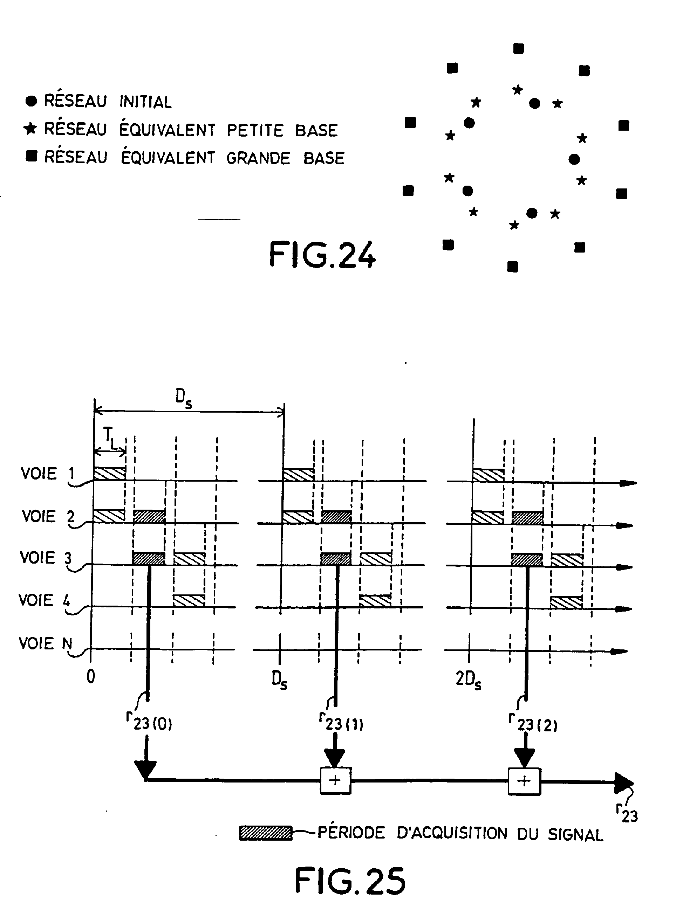

La matrice de covariance du signal $R_s$ obtenue est indépendante de la commutation (i,j) après avoir estimé $r_{ij}$ sur un temps d'intégration T supérieur à la durée de stationnarité du signal. Dans ces conditions les méthodes de goniométrie 2 voies décrites précédemment sont applicables. Le schéma de la figure 25 résume l'intégration de l'expression (49) tenant compte de la non stationnarité du signal.

**ANNEXE A**

**GAUSS-NEWTON DU MAXIMUM DE VRAISEMBLANCE EN AZIMUT**

L'objectif est de rechercher le minimum du critère multi - dimensionnel $J(\underline{\theta})$ où $\underline{\theta}=[\theta_1 ... \theta_M]^T$ tel que :

$$J(\underline{\theta})=\text{trace}[(I - A(\underline{\theta}) [A(\underline{\theta})^\dagger A(\underline{\theta})]^{-1} A(\underline{\theta})^\dagger) UU^\dagger]$$

Où $A(\theta_1 ... \theta_M)$ désigne la matrice des vecteurs directeurs. L'objectif est de trouver un minimum de M composantes $\underline{\theta}_{min}$ de la fonction à partir d'une initialisation des azimuts à $\underline{\theta}°$. Le Gauss_Newton est basé sur le développement limité à l'ordre 2 de la fonction $J(\underline{\theta})$ au voisinage de $\theta^k$ tel que :

$$J(\underline{\theta}) \approx J(\underline{\theta}^k) + (\underline{\theta}^k-\underline{\theta})^T \nabla_k + (\underline{\theta}^k-\underline{\theta})^T H_k (\underline{\theta}^k-\underline{\theta}) \qquad (a.1)$$

Où $\nabla_k$ désigne le gradient et $H_k$ le Hessien de tel que :

$$\nabla_k( i )= \frac{\partial J(\theta^k)}{\partial \theta_i} \quad et \quad H_k( i , j )= \frac{\partial^2 J(\theta^k)}{\partial \theta_i \partial \theta_j}$$

Le minimum de fonction de l'expression (a.1) se trouve en $\theta=\theta^{k-1}$ tel que :

$$\underline{\theta}^{k+1} = \underline{\theta}^k - H_k^{-1} \nabla_k \qquad (a.2)$$

Comme au voisinage de $\theta^k$ la fonction $J(\underline{\theta})$ est plus ou moins proche de la forme quadratique de l'expression (a.1), il faut réaliser l'opération de l'équation (a.2) jusqu'à ce que l'écart entre $\underline{\theta}^k$ et $\underline{\theta}^{k+1}$ devient très faible : Dans ces conditions le Gauss-Newton a convergé et $\underline{\theta}_{min}=\theta^{k+1}$.

Pour réaliser le Gauss-Newton il faut calculer le gradient et le hessien en $\underline{\theta}^k$. Pour ce faire on réalise tout d'abord une décomposition QR de $A(\underline{\theta}^k)$ tel que :

$$A(\underline{\theta}^k)=QR=[Q_1 \; Q_2]\begin{bmatrix} R_1 \\ 0 \end{bmatrix} \quad \Rightarrow \quad [A(\underline{\theta}^k)^\dagger A(\underline{\theta}^k)]^{-1} A(\underline{\theta}^k)^\dagger=R_1^{-1}Q_1^\dagger$$

$$(I - A(\underline{\theta}^k) [A(\underline{\theta}^k)^\dagger A(\underline{\theta}^k)]^{-1} A(\underline{\theta}^k)^\dagger)=Q_2 Q_2^\dagger \qquad (a.3)$$

Les variables intermédiaires sont les suivantes :

$$\Phi= Q_2^\dagger D \quad \Psi= U^\dagger Q_2 \quad \Gamma = R_1^{-1}Q_1^\dagger U \qquad (a.4)$$

avec

$$D = [\frac{\partial \underline{a}(\theta_1)}{\partial \theta_1} \cdots \frac{\partial \underline{a}(\theta_M)}{\partial \theta_M}]$$

Le critère , le gradient et le Hessien valent alors :

$J(\underline{\theta}^k) = \text{trace}[\Psi\Psi^\dagger]$

$\nabla_k = -2 \text{ reel}[ \text{ diag } \{\Gamma\Psi\Phi\}]$

$H_k = -2 \text{ reel}[ \text{ diag } \{(\Phi^\dagger\Phi)\bullet(\Gamma\Gamma^\dagger)\}]$

Où trace(M) désigne la trace de la matrice M , diag {M} est un vecteur composé de la diagonale de la matrice M et reel {M} sa partie réel. Finalement A•B désigne le produit terme à terme des matrices A et B.
Les expressions du gradient et du Hessien de ce Gauss-Newton sont applicables lorsque chaque colonne de la matrice A($\underline{\theta}$) des vecteurs directeurs dépend d'un seul des paramètres du vecteur $\underline{\theta}$. Dans ces conditions on peut concaténer toutes le dérivées de A($\underline{\theta}$) par rapport à $\underline{\theta}$ dans une matrice D de même dimension que A($\underline{\theta}$). En particulier les expressions de ci-dessus ne sont pas valables lorsque la position d'une source dépend de deux paramètres (Voir Annexe B).

## ANNEXE B

## GAUSS-NEWTON DU MAXIMUM DE VRAISEMBLANCE EN AZIMUT ET SITE

En azimut-site le vecteur directeur $\underline{a}(\theta,\Delta)$ dépend des paramètres $\theta$ et $\Delta$ qui sont respectivement l'azimut et le site. Par changement de variable ont peut paramétrer ce vecteur par u et v tel que :

$$\underline{a}(\theta,\Delta)=\underline{a}(u,v) \quad \text{avec} \quad u=\cos(\theta)\cos(\Delta) \quad \text{et} \quad v=\sin(\theta)\cos(\Delta)$$

L'objectif est de chercher, en présence de M sources, le minimum du critère multi - dimensionnel J($\underline{p}$) avec $\underline{p}$ = $[\underline{u}^T \ \underline{v}^T]$ $\underline{u}$ =$[u_1 \dots u_M]^T$ et $\underline{v}$ =$[v_1 \dots v_M]^T$ tel que :

$$J(\underline{p})=\text{trace}[(I - A(\underline{p}) [A(\underline{p})^\dagger A(\underline{p})]^{-1} A(\underline{p})^\dagger) UU^\dagger]$$

Chaque source est caractérisée par le couple $(u_m,v_m)$. Comme dans l'annexe A on réalise un développement limité à l'ordre 2 de la fonction J($\underline{p}$) au voisinage de $\underline{p}^k$ tel que :

$$J(\underline{p}) \approx J(\underline{p}^k) + (\underline{p}^k - \underline{p})^T \nabla_k + (\underline{p}^k - \underline{p})^T H_k (\underline{p}^k - \underline{p}) \qquad (b.1)$$

Où $\nabla_k$ désigne le gradient et $H_k$ le Hessien de J en $\underline{p}^k$. Le minimum de la fonction de l'expression (b.l) se trouve en $\underline{p}=\underline{p}^{k+1}$ tel que :

$$\underline{p}^{k+1} = \underline{p}^k - H_k^{-1} \nabla_k \qquad (b.2)$$

Comme dans l'annexe A on considère que l'on atteint le minimum de J($\underline{p}$) lorsque l'écart entre $\underline{p}^k$ et $\underline{p}^{k+1}$ devient très faible : Dans ces conditions le Gauss-Newton a convergé vers $\underline{p}_{min} = \underline{p}^{k-1}$.

Pour réaliser le Gauss-Newton il faut calculer le gradient et le Hessien en $\underline{p}^k$. Pour ce faire on réalise tout d'abord une décomposition QR de $A(\underline{p}^k)$ tel que :

$$A(\underline{p}^k)=QR=[Q_1 \ Q_2]\begin{bmatrix} R_1 \\ 0 \end{bmatrix} \quad \Rightarrow \quad [A(\underline{p}^k)^\dagger A(\underline{p}^k)]^{-1} A(\underline{p}^k)^\dagger = R_1^{-1}Q_1^\dagger$$

$$(I - A(\underline{p}^k) [A(\underline{p}^k)^\dagger A(\underline{p}^k)]^{-1} A(\underline{p}^k)^\dagger)=Q_2 Q_2^\dagger \qquad (b.3)$$

Les variables intermédiaires sont les suivantes :

$$\Phi_u= Q_2^\dagger D_u \quad \Phi_v= Q_2^\dagger D_v \quad \Psi= U^\dagger Q_2 \quad \Gamma = R_1^{-1}Q_1^\dagger U \qquad (b.4)$$

avec

$$D_u = [\ \frac{\partial \underline{a}(u_1,v_1)}{\partial u_1} \ \cdots \ \frac{\partial \underline{a}(u_M,v_M)}{\partial u_M} ] \quad et \quad D_v = [\ \frac{\partial \underline{a}(u_1,v_1)}{\partial v_1} \ \cdots \ \frac{\partial \underline{a}(u_M,v_M)}{\partial v_M} ]$$

Le critère , le gradient et le Hessien valent alors :

$$J(\underline{p}^k) \ = trace[\Psi\Psi^\dagger]$$

$$\nabla_k = \begin{bmatrix} \nabla_{ku} \\ \nabla_{kv} \end{bmatrix} \quad avec \quad \begin{cases} \nabla_{ku} = -2 \ reel[diag\{\Gamma\Psi\Phi_u\}] \\ \nabla_{kv} = -2 \ reel[diag\{\Gamma\Psi\Phi_v\}] \end{cases}$$

$$H_k = \begin{bmatrix} H_{uu} & H_{uv} \\ H_{uv} & H_{vv} \end{bmatrix} \quad avec \quad \begin{cases} H_{uu} = -2reel[diag\{(\Phi_u^\dagger\Phi_v)\bullet(\Gamma\Gamma^\dagger)^T\}] \\ H_{uv} = -2reel[diag\{(\Phi_u^\dagger\Phi_v)\bullet(\Gamma\Gamma^\dagger)^T\}] \\ H_{vv} = -2reel[diag\{(\Phi_u^\dagger\Phi_v)\bullet(\Gamma\Gamma^\dagger)^T\}] \end{cases}$$

**ANNEXE C**

**GAUSS-NEWTON DU MV 2 VOLES PAR COUPLE D'ANTENNES EN AZIMUT**

L'objectif est de rechercher le minimum du critère multi - dimensionnel $J(\underline{\theta})$ où $\underline{\theta}=[\theta_1 \ ... \ \theta_M]^\tau$ sans apriori sur la structure de la matrice des vecteurs directeurs $A(\underline{\theta})$. En particulier dans le cas du MV 2 voies par couple d'antenne la matrice $A(\underline{\theta})$ n'a pas la structure requise de l'annexe A. Cette remarque est valable pour les méthodes direct et indirect par couple de voie:

$$J(\underline{\theta})=\text{trace}[(I - A(\underline{\theta}) [A(\underline{\theta})^{t}A(\underline{\theta})]^{-1} A(\underline{\theta})^{t}) UU^{t}]$$

Comme dans les annexes A et B on réalise un développement limité à l'ordre 2 de la fonction $J(\underline{\theta})$ au voisinage de $\underline{\theta}^k$ tel que :

$$J(\underline{\theta}) \approx J(\underline{\theta}^k) + (\underline{\theta}^k-\underline{\theta})^T \nabla_k + (\underline{\theta}^k-\underline{\theta})^T H_k (\underline{\theta}^k- \underline{\theta}) \qquad (c.1)$$

Où $\nabla_k$ désigne le gradient et $H_k$ le Hessien. Le minimum de fonction de l'expression (c.1) se trouve en $\underline{\theta}=\underline{\theta}^{k-1}$tel que :

$$\underline{\theta}^{k+1} = \underline{\theta}^k - H_k^{-1} \nabla_k \qquad (c.2)$$

Comme au voisinage de $\theta^k$ la fonction $J(\underline{\theta})$ est plus ou moins proche de la forme quadratique de l'expression (c.l), il faut réaliser l'opération de l'équation (c.2) jusqu'à ce que l'écart entre $\underline{\theta}^k$ et $\theta^{k+1}$ devient très faible : Dans ces conditions le Gauss-Newton a convergé et $\underline{\theta}_{min} =\underline{\theta}^{k+1}$. Le calcul du gradient et du Hessien ce fait directement et on obtient le résultat suivant :

$$\nabla_k( i ) = \frac{\partial J(\theta^k)}{\partial \theta_i} = -2 \text{ reel } [ \text{ trace } \{ \Pi_b(\underline{\theta}^k) D_i(\underline{\theta}^k) A(\underline{\theta}^k)^{\#} UU^t \} ]$$

$$H_k( i , j )= \frac{\partial^2 J(\theta^k)}{\partial \theta_i \partial \theta_j} = -2 \text{ reel}[\text{trace} \{ \Pi_b(\underline{\theta}^k) D_i(\underline{\theta}^k) [A(\underline{\theta})^t A(\underline{\theta})]^{-1} D_j(\underline{\theta}^k)^t \Pi_b(\underline{\theta}^k) UU^t \}]$$
$$+2 \text{ reel}[\text{trace}\{ A(\underline{\theta}^k)^{\#t} D_j(\underline{\theta}^k) \Pi_b(\underline{\theta}^k) D_i(\underline{\theta}^k)^t A(\underline{\theta}^k)^{\#} UU^t \}]$$
$$+2 \text{ reel}[\text{trace}\{ \Pi_b(\underline{\theta}^k) D_i(\underline{\theta}^k) A(\underline{\theta}^k)^{\#} D_j(\underline{\theta}^k)^t A(\underline{\theta}^k)^{\#} UU^t \}]$$
$$+2 \text{ reel}[\text{trace}\{ \Pi_b(\underline{\theta}^k) D_j(\underline{\theta}^k) A(\underline{\theta}^k)^{\#} D_i(\underline{\theta}^k)^t A(\underline{\theta}^k)^{\#} UU^t \}]$$

$$A(\underline{\theta})^{\#} = [A(\underline{\theta})^t A(\underline{\theta})]^{-1} A(\underline{\theta})^t$$

$$\Pi_b(\theta) = I - A(\underline{\theta})A(\underline{\theta})^{\#}$$

$$D_i(\underline{\theta}) = \frac{\partial A(\underline{\theta})}{\partial \theta_i}$$

## Revendications

1.   - Procédé de localisation de sources radioélectriques au moyen d'un radiogoniomètre haute résolution deux voies comportant un réseau d'un nombre déterminé N de capteurs ($2_1$, $2_2$, ..., $2_N$) **caractérisé en ce qu'**il comporte au moins les étapes suivantes :

* multiplexer les signaux fournis par les N capteurs sur les entrées de deux récepteurs $(3_1, 3_2)$,
* estimer la matrice de covariance des signaux fournis par les deux récepteurs $(3_1, 3_2)$ par le calcul d'intercorrélations successives respectivement entre les signaux multiplexés au travers du premier récepteur $(3_1)$ et le signal fourni par un capteur de référence et obtenu en sortie du deuxième récepteur $(3_2)$,
* estimer les angles d'arrivée des ondes émises par les sources à partir d'une estimation de la matrice de covariance estimée.

2. - Procédé selon la revendication 1 **caractérisé en ce que** l'étape 2 comporte une étape où l'on détermine un vecteur d'intercorrélation $r(\tau)$ à partir des éléments d'intercorrétation et on applique un algorithme de type MUSIC.

3. - Procédé selon la revendication 1 **caractérisé en ce que** l'étape 2 comporte une étape où l'on concatène l'ensemble des inter corrélations $r_{no}$ pour former un même vecteur $r$ et on applique une méthode du type maximum de vraisemblance.

4. - Procédé selon l'une quelconque des revendications 1 à 3, **caractérisé en ce que** l'estimation de la matrice de covariance est obtenue par le calcul d'intercorrélation entre couples de capteurs.

5. - Procédé selon l'une quelconque des revendications 1 à 4, **caractérisé en ce qu'**il consiste à adjoindre à un des deux récepteurs un filtre de tarage (7).

6. - Radiogoniomètre haute résolution deux voies pour la localisation de sources radioélectriques comportant un nombre déterminé de capteurs $(2_1, 2_2, ..., 2_N)$ **caractérisé en ce qu'**il comporte deux récepteurs $(3_1, 3_2)$ couplés respectivement aux N capteurs du réseau $(2_1, 2_2, ..., 2_N)$ au travers d'un multiplexeur (4) et à un capteur de référence (5) et un dispositif de calcul (6) couplé aux sorties des deux récepteurs adapté à estimer la matrice de covariance des signaux fournis par les deux récepteurs $(3_1, 3_2)$ par le calcul d'intercorrélations successives respectivement entre les signaux multiplexés au travers du premier récepteur $(3_1)$ et le signal fourni par le capteur de référence (5) et obtenu en sortie du deuxième récepteur $(3_2)$ et estimer les angles d'arrivée des ondes émises par les sources à partir d'une estimation de la matrice de covariance estimée.

**Claims**

1. Process for locating radio sources by means of a two-channel high resolution radiogoniometer comprising a network of a specified number of sensors $(2_1, 2_2 ..., 2_N)$ , **characterized in that** it comprises at least the following steps:

- multiplexing the signals supplied by the N sensors on the inputs of two receivers $(3_1, 3_2)$,
- estimating the covariance matrix of the signals supplied by the two receivers $(3_1, 3_2)$ by calculating successive cross-correlations respectively between the signals multiplexed through the first receiver $(3_1)$ and the signal supplied by a reference sensor and obtained at the output of the second receiver $(3_2)$,
- estimating the angles of arrival of the waves emitted by the sources on the basis of an estimation of the estimated covariance matrix.

2. Process according to Claim 1, **characterized in that** step 2 comprises a step in which a cross-correlation vector r $(\tau)$ is determined on the basis of the cross-correlation elements and a MUSIC type algorithm is applied.

3. Process according to Claim 1, **characterized in that** step 2 comprises a step in which all the cross-correlations $r_{n0}$ are concatenated to form one and the same vector r and a method of the maximum likelihood type is applied.

4. Process according to any one of Claims 1 to 3, **characterized in that** the estimation of the covariance matrix is obtained through the calculation of cross-correlation between pairs of sensors.

5. Process according to any one of Claims 1 to 4, **characterized in that** it consists in supplementing one of the two receivers with a calibration filter (7).

6. Two-channel high resolution radiogoniometer for locating radio sources comprising a specified number of sensors $(2_1, 2_2, ... 2_N)$ , **characterized in that** it comprises two receivers $(3_1, 3_2)$ coupled respectively to the N sensors of

the network ($2_1$, $2_2$, ... $2_N$), through a multiplexer (4), and to a reference sensor (5) and a calculation device (6), coupled to the outputs of the two receivers and adapted for estimating the covariance matrix of the signals supplied by the two receivers ($3_1$, $3_2$) by calculating successive cross-correlations respectively between the signals multiplexed through the first receiver ($3_1$) and the signal supplied by the reference sensor (5) and obtained at the output of the second receiver ($3_2$) and estimating the angles of arrival of the waves emitted by the sources on the basis of an estimation of the estimated covariance matrix.

**Patentansprüche**

1. Verfahren zur Ortung von Funkquellen mittels eines hochauflösenden zweikanaligen Funkpeilers, umfassend ein Raster einer bestimmten Anzahl N von Sensoren ($2_1$, $2_2$, ..., $2_N$), **dadurch gekennzeichnet, dass** es mindestens folgende Schritte umfasst:

   - Multiplexen der Signale, die von den N Sensoren an den Eingängen von zwei Empfängern ($3_1$, $3_2$) geliefert werden,
   - Schätzen der Kovarianzmatrix der von den beiden Empfängern ($3_1$, $3_2$) gelieferten Signale durch das Berechnen von aufeinander folgenden Kreuzkorrelationen, jeweils zwischen den über den ersten Empfänger ($3_1$) gemultiplexten Signalen und dem Signal, das von einem Bezugssensor geliefert und am Ausgang des zweiten Empfängers ($3_2$) erhalten wird,
   - Schätzen der Eintrittswinkel der von den Quellen emittierten Wellen, ausgehend von einer Schätzung der geschätzten Kovarianzmatrix.

2. Verfahren nach Anspruch 1, **dadurch gekennzeichnet, dass** der Schritt 2 einen Schritt umfasst, bei dem ein Kreuzkorrelationsvektor $r(\tau)$ ausgehend von Kreuzkorrelationselementen bestimmt wird, und ein Algorithmus der Art MUSIC angewendet wird.

3. Verfahren nach Anspruch 1, **dadurch gekennzeichnet, dass** der Schritt 2 einen Schritt umfasst, in dem die Gruppe von Kreuzkorrelationen $r_{no}$ verkettet wird, um denselben Vektor r zu bilden, und ein Verfahren von der Art der größten Mutmaßlichkeit angewendet wird.

4. Verfahren nach einem der Ansprüche 1 bis 3, **dadurch gekennzeichnet, dass** die Schätzung der Kovarianzmatrix durch das Berechnen einer Kreuzkorrelation zwischen Sensorpaaren erhalten wird.

5. Verfahren nach einem der Ansprüche 1 bis 4, **dadurch gekennzeichnet, dass** es darin besteht, zu einem der beiden Empfänger ein Abgleichfilter (7) hinzuzufügen.

6. Hochauflösender zweikanaliger Funkpeiler zum Orten von Radioquellen, die eine bestimmte Anzahl von Sensoren ($2_1$, $2_2$, ..., $2_N$) umfassen, **dadurch gekennzeichnet, dass** er folgendes umfasst: zwei Empfänger ($3_1$, $3_2$), die jeweils mit den N Sensoren des Rasters ($2_1$, $2_2$, ..., $2_N$) über einen Multiplexer (4) und mit einem Bezugssensor (5) gekoppelt sind, und eine Rechenvorrichtung (6), die mit den Ausgängen der beiden Empfänger gekoppelt und dazu geeignet ist, die Kovarianzmatrix der von den beiden Empfängern ($3_1$, $3_2$) gelieferten Signale durch das Berechnen von aufeinander folgenden Kreuzkorrelationen, jeweils zwischen den über den ersten Empfänger ($3_1$) gemultiplexten Signalen und dem Signal, das von dem Bezugssensor (5) geliefert und am Ausgang des zweiten Empfängers ($3_2$) erhalten wird, zu schätzen, und um die Eintrittswinkel der von den Quellen emittierten Wellen ausgehend von einer Schätzung der geschätzten Kovarianzmatrix zu schätzen.

EP 1 259 833 B1

FIG.1

ÉMETTEUR

AZIMUT $\theta_p$

RÉCEPTEUR

RÉCEPTEUR

DISPOSITIF DE CALCUL

COMMUTATEUR

VOIE 0
VOIE 1
VOIE 2
VOIE 3
VOIE N

TEMPS

FIG.2

FIG.3

VOIE 0

VOIE 1

VOIE 2

VOIE N

$x_0(t)$
$x_1(t)$
$x_2(t)$
$x_N(t)$

RÉCEPTEUR

RÉCEPTEUR

DISPOSITIF DE CALCUL

COMMUTATEUR

$y(t)$

22

EP 1 259 833 B1

FIG.4

MAXIMUM DU PSEUDO-SPECTRE

FIG.5

FIG.6

23

FIG.7

FIG.8

FIG.9

VOIE 1

VOIE 2

VOIE N

RÉCEPTEUR

$3_2$

$x_0(t)$

RÉCEPTEUR

$3_1$

$y(t)$

COMMUTATEUR

4

FIG.10

ÉMETTEUR

$2_2$

AZIMUT $\theta_p$

$2_1$

$2_N$

RÉCEPTEUR

$3_2$

RÉCEPTEUR

$3_1$

COMMUTATEUR

4

FIG.11

EP 1 259 833 B1

VOIE 1
VOIE 2
VOIE 3
VOIE 4
VOIE N

$t_{12}$  $t_{23}$  $t_{34}$  $t_{N1}$  TEMPS

FIG.12

CAPTEUR 1  $x_1(t)$
CAPTEUR 2  $x_2(t)$
CAPTEUR N  $x_N(t)$

COMMUTATEUR

RÉCEPTEUR $3_2$  u(t)
RÉCEPTEUR $3_1$  v(t)

FIG.13

$T_{total} = (N-1) N (T + \delta t)/2$

VOIE 1
VOIE 2
VOIE 3
VOIE 4
VOIE N

TEMPS

$F_{12}$  $F_{13}$  $F_{14}$  $F_{1N}$  $F_{12}$

FIG.14

26

FIG.15

FIG.16

FIG.17

MAXIMUM DU
PSEUDO-SPECTRE

FIG.18

FIG.19

CAS PETITES BASES
CAPTEURS

CAS GRANDES BASES
CAPTEURS

COMMUTATIONS

FIG.20

EP 1 259 833 B1

- ● RÉSEAU INITIAL
- ★ RÉSEAU ÉQUIVALENT PETITES BASES
- ■ RÉSEAU ÉQUIVALENT GRANDES BASES

FIG. 21

-10 log 10 [ J($\theta_1$, $\theta_2$) ]

MAXIMUM DU
PSEUDO-SPECTRE

FIG. 22

-10 log 10 [ J($\theta_1$, $\theta_2$) ]

FIG. 23

RÉSEAU  INITIAL
★ RÉSEAU  ÉQUIVALENT  PETITE  BASE
■ RÉSEAU  ÉQUIVALENT  GRANDE  BASE

FIG.24

VOIE 1
VOIE 2
VOIE 3
VOIE 4
VOIE N

$D_s$

$T_L$

0

$D_s$

$2D_s$

$r_{23(0)}$

$r_{23(1)}$

$r_{23(2)}$

+

+

$r'_{23}$

PÉRIODE  D'ACQUISITION  DU  SIGNAL

FIG.25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4407716 A
- DE 3639057 C

- EP 847161 A0

**Littérature non-brevet citée dans la description**

- **M.VIBERG ; B.OTTERSTEN ; T.KAILATH.** Détection and estimation in sensor arrays using Weigthed Subspace Fitting. *IEEE trans on signal processing,* Novembre 1991, vol. 39 (11